# EUROPÄISCHE PATENTSCHRIFT

(11) **EP 3 837 132 B1**
(45) Veröffentlichungstag und Bekanntmachung des Hinweises auf die Patenterteilung: **26.10.2022**
(21) Anmeldenummer: 19756125.1
(22) Anmeldetag: 05.08.2019
(51) Int. Cl.: B60K 17/04, F16H 1/46, F16D 55/00

(54) **GETRIEBE, INSBESONDERE FÜR EINE EINZELRADANTRIEBSEINHEIT**
TRANSMISSION, IN PARTICULAR FOR A SINGLE WHEEL DRIVE UNIT
TRAIN D'ENGRENAGES, NOTAMMENT POUR UNE UNITÉ DE PROPULSION DE ROUE INDÉPENDANTE

(30) Priorität: 13.08.2018 DE 102018213593
(43) Veröffentlichungstag der Anmeldung: 23.06.2021
(73) Patentinhaber: Robert Bosch GmbH, 70442 Stuttgart (DE)
(72) Erfinder: MEISE, Andreas, 44799 Bochum (DE); PECH, Marco, 59427 Unna (DE); GLINKA, Bartholomaeus, 42283 Wuppertal (DE); SCHMEINK, Markus, 44263 Dortmund (DE)
(86) Internationale Anmeldenummer: PCT/EP2019/071034
(87) Internationale Veröffentlichungsnummer: WO 2020/035344

(56) Entgegenhaltungen:
- EP-A2- 0 812 718
- DE-A1- 10 309 666
- DE-A1- 10 331 186
- DE-A1-102015 213 692

## Beschreibung

Die Erfindung betrifft ein Kompaktgetriebe, das insbesondere zur Verwendung innerhalb einer Einzelradantriebseinheit vorgesehen ist. Das Kompaktgetriebe weist einen gestellfesten Getriebeträger, der eine durchgehende zentrale Ausnehmung hat, und ein Hauptgetriebe auf, das ein innenverzahntes Hohlrad, das außen auf dem Getriebeträger drehbar gelagert ist, vor der einen Stirnseite des Getriebeträgers angeordnete, außenverzahnte und mit dem Hohlrad kämmende Zahnräder und eine Eingangssonnenwelle umfasst. Außerdem hat das Kompaktgetriebe eine Getriebevorstufe, die innerhalb der zentralen Ausnehmung des Getriebeträgers angeordnet ist und eine Vorstufeneingangswelle mit einem außenverzahnten Vorstufensonnenrad, ein Vorstufenhohlrad und mindestens ein sowohl mit dem Vorstufensonnenrad als auch mit dem Vorstufenhohlrad kämmendes Vorstufenzwischenrad, vorzugsweise mehrere Vorstufenzwischenräder, aufweist.

Eine Antriebseinheit umfassend einen Hydraulikmotor und ein Kompaktgetriebe, das einen gestellfesten Getriebeträger, der eine durchgehende zentrale Ausnehmung hat, und ein Getriebe mit einem innenverzahntes Hohlrad, das außen auf dem Getriebeträger drehbar gelagert ist, mit vor der einen Stirnseite des Getriebeträgers angeordneten, außenverzahnten und mit dem Hohlrad kämmenden Zahnräder und mit einer Eingangssonnenwelle aufweist, ist zum Beispiel aus dem Datenblatt RD 77110, Ausgabe 02.2016 der Bosch Rexroth AG bekannt. Der Hydraulikmotor ist in Einschubbauweise ausgeführt und teilweise in der zentralen Ausnehmung des Getriebeträgers aufgenommen. Antriebseinheiten dieser Art werden als Einzelradantriebe für rad- oder kettengetriebene Fahrzeuge und andere mobile Geräte verwendet. Darüber hinaus sind sie überall dort einsetzbar, wo etwas bewegt oder gedreht wird, zum Beispiel an Windentrommeln.

Es ist auch bekannt, ein Kompaktgetriebe mit einem Elektromotor zu kombinieren. Um dabei eine ähnlich hohe Leistungsdichte wie beim Einsatz eines Hydraulikmotors zu erzielen, muss ein Elektromotor mit einer hohen Drehzahl größer 5000 oder größer 10000 Umdrehungen pro Minute betrieben werden. Zur Wandlung von Drehzahl und Drehmoment auf das Niveau eines Hydraulikmotors wird dem zur Verwendung mit einem Hydraulikmotor vorgesehenen Getriebe, das im Folgenden als Hauptgetriebe bezeichnet wird, eine Getriebevorstufe hinzugefügt.

Ein derartiges Getriebe mit einer Getriebevorstufe ist zum Beispiel aus der ATZ offhighway, Ausgabe März 2015 bekannt. Dabei ist die Getriebevorstufe mit einem eigenen Gehäuse an den Getriebeträger des Hauptgetriebes angeflanscht. Dadurch wird der Bauraum im Vergleich zur Verwendung eines Hydraulikmotors in axialer Richtung beträchtlich vergrößert. Auch ist ein beträchtlicher zusätzlicher Aufwand zu betreiben.

Aus der DE 103 31186 A1 ist ebenfalls ein Kompaktgetriebe bekannt, das ein Hauptgetriebe und eine Getriebevorstufe umfasst und das zusammen mit einem Elektromotor verwendet wird. Die Getriebevorstufe ist dort innerhalb der zentralen Ausnehmung des Getriebeträgers angeordnet, wobei das Vorstufenhohlrad fest und unverdrehbar in den Getriebeträger eingesetzt ist und die Vorstufenzwischenräder als zwischen dem Vorstufenhohlrad und einem Vorstufensonnenrad umlaufende Planetenräder an einem Planetensteg drehbar gelagert sind. Der Planetensteg bildet den Abtrieb der Getriebevorstufe und ist drehfest mit einer Eingangssonnenwelle des Hauptgetriebes gekoppelt.

Der Erfindung liegt die Aufgabe zugrunde, ein Kompaktgetriebe, mit einem gestellfesten Getriebeträger, der eine durchgehende zentrale Ausnehmung hat, mit einem innenverzahnten Hohlrad, das außen auf dem Getriebeträger drehbar gelagert und Teil eines Hauptgetriebes ist, das des Weiteren vor der einen Stirnseite des Getriebeträgers angeordnete, außenverzahnte und mit dem Hohlrad kämmende Zahnräder und eine Eingangssonnenwelle umfasst, und mit einer Getriebevorstufe, die innerhalb der zentralen Ausnehmung des Getriebeträgers angeordnet ist und eine Vorstufeneingangswelle mit einem außenverzahnten Vorstufensonnenrad, ein Vorstufenhohlrad und mindestens ein sowohl mit dem Vorstufensonnenrad als auch mit dem Vorstufenhohlrad kämmendes Vorstufenzwischenrad, vorzugsweise mehrere Vorstufenzwischenräder aufweist, so auszubilden, dass seine Handhabung erleichtert und die Gefahr einer Verschmutzung verringert ist.

Diese Aufgabe wird durch die Merkmale des Anspruchs 1 gelöst.

Zwischen dem Zusatzträger und dem Getriebeträger ist vorteilhafterweise eine Dichtung angeordnet, so dass über die Spalte zwischen diesen beiden Teilen kein im Getriebe befindliches Schmieröl nach außen gelangen kann. Der Zusatzträger kann zumindest teilweise in die zentrale Ausnehmung des Getriebeträgers eingesetzt sein. Die Dichtung zwischen dem Getriebeträger und dem Zusatzträger ist dann vorzugsweise eine Radialdichtung.

Es ist denkbar, dass der Zusatzträger außen über seine gesamte Dicke den gleichen Außendurchmesser hat. Allerdings wäre dann viel Material vom Getriebeträger wegzunehmen, so dass dieser den gestellten Anforderungen an seine Festigkeit nicht mehr genügen könnte. Es erscheint deshalb günstig, wenn der Zusatzträger einen umlaufenden Bund aufweist, mit dem er axial auf dem Getriebeträger aufliegt und an dem er an dem Getriebeträger befestigt ist. Der Bund kann zum Beispiel nur etwa ein Sechstel der Gesamtstärke des Zusatzträgers am Außenumfang haben.

Der umlaufende Bund des Zusatzträgers ist wegen seiner geringen Stärke von einer Senkung im Getriebeträger aufgenommen, wobei wegen der geringen Tiefe der Senkung der Getriebeträger durch die Senkung kaum geschwächt wird. Die Dicke des Bundes am Zusatzträger und die Tiefe der Senkung im Getriebeträger können so aufeinander abgestimmt sein, dass der Zusatzträger und der Getriebeträger stirnseitig miteinander fluchten. Darüber hinaus können Schrauben mit Senkkopf für die Befestigung des Zusatzträgers verwendet werden. Durch die Getriebevorstufe werden somit die Außenmaße eines bekannten Getriebes ohne Getriebevorstufe nicht verändert. Die Schrauben mit Senkkopf können dabei in erster Linie die Funktion haben, dafür zu sorgen, dass der Zusatzträger axial am Getriebeträger anliegt und nicht herausfällt. Für die Abstützung des Drehmoments und die Positionierung des Zusatzträgers zwischen dem Zusatzträger und dem Getriebeträger können Stifte vorgesehen sein.

Zwischen dem Zusatzträger und der Vorstufeneingangswelle kann ein Radialwellendichtring angeordnet sein. Dies ist vor allem dann vorteilhaft, wenn ein an das Kompaktgetriebe anzuflanschender Elektromotor nicht öldicht nach außen abgedichtet ist oder der anzuflanschende Motor zwar abgedichtet ist, jedoch kein gemeinsamer Ölhaushalt von Motor und Getriebe besteht.

Wie an sich aus der DE 103 31 186 A1 können die Vorstufenzwischenräder an einem drehbar gelagerten Steg drehbar gelagert sein und dann als Planetenräder mit dem Vorstufensonnenrad und einem gehäusefesten Hohlrad kämmen. Der Steg wäre dann der Abtrieb der Getriebevorstufe. Für die Koppelung des Abtriebs der Getriebevorstufe mit einer Welle von großem Durchmesser erscheint es jedoch günstiger, wenn die Vorstufenzwischenräder auf fest am Zusatzträger befindliche Lagerzapfen gelagert sind und das Vorstufenhohlrad den Abtrieb der Getriebevorstufe darstellt. Das Vorstufenhohlrad kann schalenförmig mit einem Boden ausgebildet sein, in dem sich eine zentrale Öffnung befindet, deren Rand mit einer Innenverzahnung versehen ist, über die das Vorstufenhohlrad drehfest mit der Eingangssonnenwelle des Hauptgetriebes gekoppelt ist derart, dass das Vorstufenhohlrad und die Eingangssonnenwelle die gleiche Drehzahl haben. Dass die Vorstufenzwischenräder um feststehende Achsen drehen, ist besonders bei hohen Drehzahlen der Vorstufeneingangswelle, zum Beispiel bei Drehzahlen größer als 10000 Umdrehungen pro Minute von großem Vorteil. Die bei hohen Drehzahlen wünschenswerte Zwangsschmierung der Lager der Vorstufenzwischenräder ist bei ortsfesten Drehachsen erheblich einfacher als bei umlaufenden Drehachsen. Zudem wirken auf die Lager der Vorstufenzwischenräder keine großen Zentrifugalkräfte, wenn sich die Lager nur um ihre eigene Mittelachse drehen.

Die Koppelung des Vorstufenhohlrads mit der Eingangssonnenwelle des Hauptgetriebes geschieht vorteilhafterweise über eine Mitnehmerhülse, die an ihrem einen Ende über ein Drehlager am Getriebeträger drehbar gelagert und an ihrem anderen Ende mit einer Außenverzahnung rundum in die am Rand der zentralen Öffnung des Vorstufenhohlrads ausgebildete Innenverzahnung eingreift. Ein großer Außendurchmesser der Mitnehmerhülse ist besonders dann von Vorteil, wenn an dieser die eine Hälfte der Lamellen einer Lamellenbremse drehfest gehalten sind. Die Außenverzahnung der Mitnehmerhülse kann so ausgebildet sein, dass axial hintereinander einerseits das Vorstufenhohlrad und andererseits die Lamellen in die Außenverzahnung eingreifen.

Die Vorstufenzwischenräder werden vorteilhafterweise durch eine Zwischenräderplatte, die vor der dem Zusatzträger abgewandten Stirnseite der Vorstufenzwischenräder angeordnet die mit den Lagerzapfen für die Vorstufenzwischenräder als Abstandshalter am Zusatzträger befestigt ist, am Zusatzträger gehalten.

Die Lagerzapfen können als Hohlbolzen ausgebildet sein, wobei die Zwischenräderplatte mit Hilfe von durch die Lagerzapfen hindurchgehenden Schrauben an dem Zusatzträger befestigt ist.

Die Lagerzapfen können in Senkungen des Zusatzträgers und /oder der Zwischenräderplatte zentriert sein.

Sind der Zusatzträger und die Zwischenräderplatte im Hinblick auf die Oberflächen- und Materialeigenschaften nicht geeignet, um unmittelbar als axiale Anlaufstellen für die Vorstufenzwischenräder zu dienen, so können axial zwischen dem Zusatzträger und /oder der Zwischenräderplatte und den Vorstufenzwischenrädern Anlaufscheiben eingefügt sein. Bei höheren Anforderungen können auch Axiallager verwendet werden.

Die Zwischenräderplatte kann radial über die Vorstufeneingangswelle reichen und dann eine Axialbewegung der Vorstufeneingangswelle in die eine Richtung begrenzen.

Bei hohen Drehzahlen ist es von Vorteil, wenn die Lager der Vorstufenzwischenräder gezielt mit Schmieröl versorgt werden. Dies kann über einen Fluidpfad erfolgen, der zumindest teilweise im Zusatzträger verläuft. Die Schmierstoffversorgung der Lager kann von innen über die Lagerzapfen oder alternativ auch über Düsen erfolgen, die von außen auf die Vorstufenzwischenräder gerichtet sind. Weiterhin ist es bei geeigneter Konstruktion möglich, von den Zahnrädern aufgewirbeltes Spritzöl aus dem Ölsumpf gezielt zu den Lagern zu leiten.

In der zentralen Ausnehmung des Getriebeträgers können wie an sich bekannt die Bremslamellen und ein Betätigungskolben einer Betriebsbremse oder einer Parkbremse angeordnet sein. Die Getriebevorstufe befindet sich dann radial innerhalb von Teilen der Bremse.

Ein Ausführungsbeispiel eines erfindungsgemäßen Kompaktgetriebes sowie zum Vergleich ein Kompaktgetriebe ohne Getriebevorstufe mit eingesetztem Hydraulikmotor sind in den Zeichnungen dargestellt. Anhand der Figuren dieser Zeichnungen wird die Erfindung nun näher erläutert.

Es zeigen
- Figur 1: einen axialen Schnitt durch das Ausführungsbeispiel eines erfindungsgemäßen Kompaktgetriebes und
- Figur 2: einen axialen Schnitt durch ein herkömmliches Kompaktgetriebe mit eingesetztem Hydraulikmotor.

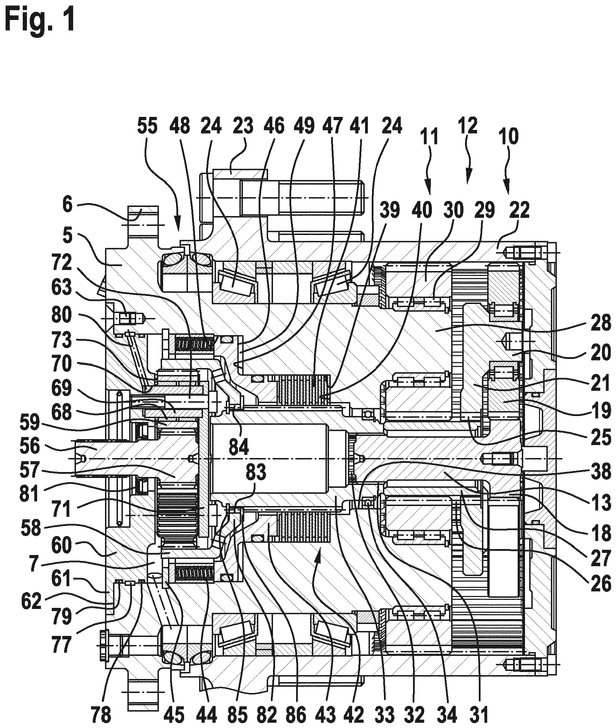

Das Getriebe nach Figur 1 umfasst einen Getriebeträger 5 mit einem Befestigungsflansch 6, mit dem der Getriebeträger an dem Fahrgestell eines Fahrzeugs befestigt werden kann. Der Getriebeträger 5 ist ein Hohlkörper mit einer zentralen Ausnehmung 7, der außen und innen Wandabschnitte aufweist, die sich in ihren Durchmessern voneinander unterscheiden.

Das Getriebe umfasst weiterhin eine Planetengetriebestufe 10 und eine zweite Getriebestufe 11. Die Planetengetriebestufe 10 und die zweite Getriebestufe 11 bilden das Hauptgetriebe 12. Dieses hat eine Eingangssonnenwelle 13, an der einstückig das Sonnenrad 18 der Planetengetriebestufe 10 ausgebildet ist. Bei anderen Ausführungen kann das Hauptgetriebe auch noch weitere Getriebestufen haben.

Das Sonnenrad 18 kämmt mit mehreren außenverzahnten Planetenrädern 19, die in gleichen Abständen zueinander über Zylinderrollenlager drehbar auf Lagerzapfen 20 eines Planetensteges 21 gelagert sind. Die Planetenräder 19 kämmen außer mit dem Sonnenrad 18 noch mit einem innenverzahnten Hohlrad 22, das einen Befestigungsflansch 23 aufweist, mit dem es zum Beispiel an der Felge eines Rades, an einem Kettenrad, an einer Walzenbandage, an einer Windentrommel oder an einer Mischertrommel befestigt werden kann. Das Hohlrad 22 bildet somit den radseitigen Ausgang des Getriebes. Es ist mit Hilfe zweier in O-Anordnung eingebauter Kegelrollenlager 24 außen auf dem Getriebeträger 5, der von einer Stirnseite des Hohlrades 22 aus in dieses hineinragt, drehbar gelagert. An der anderen Stirnseite ist das Hohlrad 22 durch einen Deckel verschlossen.

Der Planetensteg 21 ist mit einer Innenverzahnung 25 versehen, mit der er auf einem hülsenförmigen, mit einer Außenverzahnung 26 versehenen, zweiten Sonnenrad 27 steckt. Das Sonnenrad 27 ist koaxial zur Eingangssonnenwelle 13 angeordnet.

An dem Getriebeträger 5 sind um die Eingangssonnenwelle 13 herum mit gleichen Winkelabständen zueinander mehrere axial ausgerichtete Lagerzapfen 28 ausgebildet, von denen jeder über eine zweireihige Wälzlageranordnung 29 ein außenverzahntes Stirnrad 30 lagert, das sowohl mit dem Sonnenrad 27 als auch mit dem Hohlrad 22 kämmt. Da die Lagerzapfen 28 bezüglich des Getriebeträgers 5 eine feste Lage einnehmen, weist die zweite Getriebestufe 11 keine umlaufenden Planetenräder auf. Wegen der im Vergleich zur Planetengetriebestufe 10 ähnlichen Anordnung der Zahnräder zwischen einem Zentralrad und einem Hohlrad wird jedoch auch die zweite Getriebestufe oft als Planetengetriebestufe bezeichnet.

Die Eingangssonnenwelle 13 des Hauptgetriebes 12, an deren einem Ende einstückig das Sonnenrad 18 ausgebildet ist, weist an ihrem anderen Ende eine Außenverzahnung 31 auf, mit der sie in eine Innenverzahnung 32 einer Mitnehmerhülse 33 eingesteckt ist. Mitnehmerhülse 33 und Eingangssonnenwelle 13 sind über die Verzahnungen drehfest miteinander gekoppelt. Im Bereich ihrer Innenverzahnung ist die Mitnehmerhülse 33 über ein Rillenkugellager 34 am Getriebeträger 5 drehbar gelagert. Das Rillenkugellager 34 ist hier als Loslager ausgeführt und soll in erster Linie die Laufruhe verbessern. Denkbar ist es jedoch auch, die Mitnehmerhülse 33 anstelle mit Hilfe eines Loslagers mit einem Festlager zu lagern. Gegebenenfalls kann auf eine Lagerung der Mitnehmerhülse am Getriebeträger 5 auch verzichtet werden.

Die zentrale Ausnehmung 7 des Getriebeträgers 5 hat Abschnitte mit verschiedenen Durchmessern, wobei sich das Rillenkugellager 34 in dem am weitesten innen liegenden und den kleinsten Durchmesser aufweisenden Abschnitt 38 befindet. Ohne Berücksichtigung eines Abschnitts, der einen nur geringfügig größeren Durchmesser als der Abschnitt 38 hat und axial relativ kurz ist, folgt dem Abschnitt 38 ein Abschnitt 39, der einen wesentlich größeren Durchmesser als der Abschnitt 38 hat und der in breiten Innenschulter 40 endet. Über einen Teil der Länge des Abschnitts 39 hat der Getriebeträger 5 eine Verzahnung, in die jede zweite Lamelle eines Lamellenpakets 41 einer Parkbremse 42 eingreift. Die andere Hälfte der Lamellen des Lamellenpakets 41 sind verdrehsicher mit der Mitnehmerhülse 33 gekoppelt.

Das Lamellenpaket 41 kann über einen in die eine Richtung hydraulisch betätigbaren, ringförmigen und gestuften Bremskolben 43 von einer Federanordnung 44 gegen die Innenschulter 40 des Getriebeträgers 5 gedrückt werden, wodurch die Parkbremse wirksam wird. Die Federanordnung 44 stützt sich über einen Sicherungsring 45 am Getriebeträger 5 ab. Zwischen einer Außenschulter 46 des Bremskolbens 43 und einer Innenschulter 47, in der der Abschnitt 39 der zentralen Ausnehmung 7 des Getriebeträgers 5 in einen Abschnitt 48 mit noch größerem Durchmesser übergeht, ist ein Druckraum 49 gebildet, der über einen nicht näher gezeigten Fluidpfad im Getriebeträger 5 und ein hydraulisches Ventil mit Druck beaufschlagbar und von Druck entlastbar ist. Bei Beaufschlagung des Druckraums 49 mit Druck bewegt sich der Bremskolben 43 gegen die Federn der Federanordnung 44, so dass diese nicht mehr auf das Lamellenpaket wirken. Die Parkbremse ist gelöst. Wird der Druckraum 49 von Druck entlastet, so schiebt die Federanordnung das Lamellenpaket 41 zusammen und an die Innenschulter 40 des Getriebeträgers. Die Bremse ist betätigt.

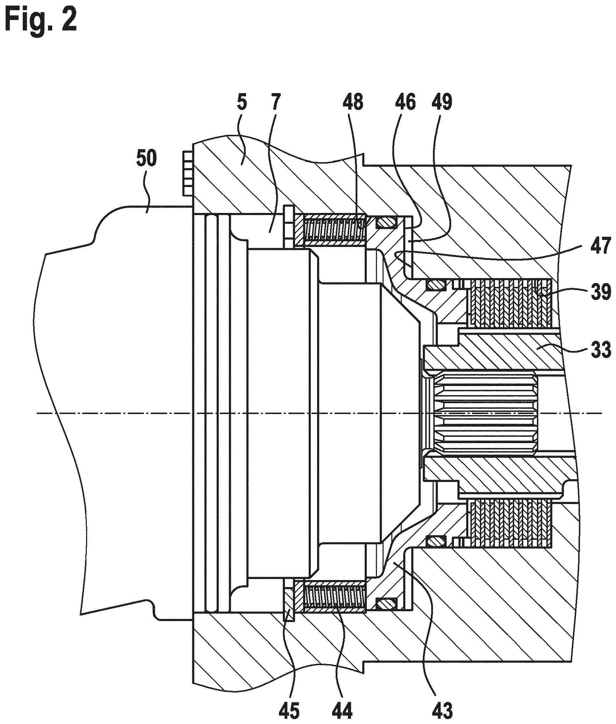

Wie aus Figur 2 hervorgeht, ist das Getriebe, soweit es bisher beschrieben ist, dafür vorgesehen, um mit einem bis zu einer Außenschulter in die zentrale Ausnehmung 7 eingeschobenen Hydraulikmotor 50 als Antriebsmotor benutzt zu werden. Die zentrale Ausnehmung 7, der Bremskolben 43 und die Federanordnung 44 mitsamt dem Sicherungsring 45 sind so gestaltet, dass der Hydraulikmotor in der Ausnehmung 7 aufgenommen werden kann. Im Vergleich zu dem Getriebe nach Figur 1 ist nur die Mitnehmerhülse 33 eine andere.

Um das Getriebe in seinem bisher beschriebenen Aufbau zusammen mit einem Elektromotor verwenden zu können und um dabei eine Leistungsdichte zu erzielen, die ähnlich groß wie bei der Verwendung eines Hydraulikmotors ist, weist das Getriebe nach Figur 1 zusätzlich eine Getriebevorstufe 55 auf, die in der zentralen Ausnehmung 7 untergebracht ist. Aufgrund einer derartigen Anordnung wird trotz dem Vorhandensein der Getriebevorstufe 55 das Getriebe in axialer Richtung nicht größer.

Die Getriebevorstufe 55 weist an einer Vorstufeneingangswelle 56 ein außenverzahntes Zentralrad oder Sonnenrad 57, ein Vorstufenhohlrad 58, das den Abtrieb der Getriebevorstufe 55 darstellt und mehrere, beispielsweise fünf Vorstufenzwischenräder 59 auf, die zwischen dem Zentralrad 57 und dem Vorstufenhohlrad 58 angeordnet sind, gleiche Winkelabstände voneinander haben und sowohl mit dem Zentralrad 57 als auch mit dem Vorstufenhohlrad 58 kämmen. Die Anzahl der Vorstufenzwischenräder kann auch eine andere als fünf sein.

Die Vorstufenzwischenräder 59 werden von einem Zusatzträger 60 getragen, der plattenförmig ausgebildet und in die zentrale Ausnehmung 7 des Getriebeträgers 5 eingesetzt ist. Zur Befestigung an dem Getriebeträger 5 weist der Zusatzträger außen einen dünnen umlaufenden Bund 61 auf, der in einer Senkung 62 des Getriebeträgers 5 liegt und mit Senkkopfschrauben 63 an dem Getriebeträger 5 befestigt ist. Weder der Zusatzträger 60 noch die seiner Befestigung am Getriebeträger 5 dienenden Senkkopfschrauben 63 stehen über den Getriebeträger 5 vor. Der Zusatzträger 60 und der Getriebeträger 5 fluchten vielmehr stirnseitig miteinander. Die Drehmomentübertragung zwischen dem Zusatzträger 60 und dem Getriebeträger 5 erfolgt über zwei Passstifte, die außerhalb der Schnittebene der Figur 1 angeordnet und deshalb in Figur 1 nicht zu erkennen sind.

Die Vorstufenzwischenräder 59 sind über zwei Nadelkränze 68 auf als Hohlbolzen 69 ausgebildeten Lagerzapfen drehbar gelagert, die in Senkungen 70 des Zusatzträgers 60 zentriert sind. Auf der dem Zusatzträger 60 abgewandten Seite der Vorstufenzwischenräder 59 ist eine Zwischenräderplatte 71 angeordnet, die ebenfalls Senkungen 70 zum Eintauchen der Hohlbolzen 69 aufweist und mit den Hohlbolzen als Abstandshalter mit durch sie und die Hohlbolzen hindurchgehenden und in den Zusatzträger 60 eingeschraubten Maschinenschrauben 72 am Zusatzträger 60 befestigt ist. Zwischen einem Vorstufenzwischenrad 59 und dem Zusatzträger 60 sowie zwischen einem Vorstufenzwischenrad 59 und der Zwischenräderplatte 71 befindet sich jeweils eine Anlaufscheibe 73 aus gehärtetem Stahl. Die Zwischenräderplatte 71 ist kein Ring, sondern ist ohne zentrale Öffnung, so dass die Vorstufeneingangswelle 56 axial an die Zwischenräderplatte anlaufen kann. Auch die Mitnehmerhülse 33 kann axial an die Zwischenräderplatte 71 anlaufen. Bei anderen Ausführungsbeispielen eines erfindungsgemäßen Kompaktgetriebes können die Lagerzapfen 69 einstückig mit dem Zusatzträger 60 oder einstückig mit der Zwischenräderplatte 71 ausgebildet sein.

Die Zwischenräderplatte 71 kann auch als Ring ausgeführt sein oder entfallen, wenn die Vorstufeneingangswelle 56 und die Mitnehmerhülse 33 axial gelagert sind oder gegeneinander axial anlaufen.

Bei dem in Figur 1 gezeigten Kompaktgetriebe werden die Nadelkränze 68 im Betrieb gezielt mit Schmieröl versorgt. Dazu läuft radial zwischen dem Getriebeträger 5 und dem Zusatzträger 60 ein Ringkanal 77 um, der zur Ausnehmung 7 hin durch einen Dichtring 78 und nach außen durch einen Dichtring 79 abgedichtet ist. Durch diese Dichtringe ist der Radialspalt zwischen dem Getriebeträger 5 und dem Zusatzträger 60 abgedichtet, so dass hierüber kein Öl aus dem Inneren des Getriebes nach außen gelangen kann. Der Ringkanal 77 ist über einen nicht näher gezeigten Fluidpfad mit einem Schmierölanschluss am Getriebeträger 5 verbunden, dem von einer externen Pumpe Schmieröl zugeführt wird. Über jeweils eine Bohrung 80 im Zusatzträger 60 ist ein Freiraum vor jedem Hohlbolzen 69 mit dem Ringkanal 77 fluidisch verbunden. Von dem Freiraum gelangt das Schmieröl über den Spalt zwischen einer Maschinenschraube 72 und einem Hohlbolzen sowie über eine Radialbohrung im Hohlbolzen an die Nadelkränze 68.

Zwischen der Vorstufeneingangswelle 56 und dem Zusatzträger 60 ist ein Radialwellendichtring 81 angeordnet, so dass auch hier die Ausnehmung 7 nach außen abgedichtet ist.

Das Vorstufenhohlrad 58 ist schalenförmig mit einem Boden 82 ausgebildet, in dem sich eine zentrale Öffnung 83 befindet. Der Rand der zentralen Öffnung ist mit einer Innenverzahnung 84 versehen, mit der das Vorstufenhohlrad 58 auf die außenverzahnte Mitnehmerhülse 33 aufgesteckt ist. Damit ist das Vorstufenhohlrad 58 über die Mitnehmerhülse 33 drehfest mit der Eingangssonnenwelle 13 des Hauptgetriebes derart gekoppelt, dass das Vorstufenhohlrad 58 und die Eingangssonnenwelle 13 die gleiche Drehzahl haben. Durch zwei in die Mitnehmerhülse 33 eingesetzte Sicherungsringe 85 und 86 ist die axiale Position des Vorstufenhohlrads 58 relativ zur Mitnehmerhülse festgelegt. Aus der Figur 1 ist deutlich ersichtlich, wie es bei kurzem axialen Bauraum durch die besondere, in einem Längsschnitt gekröpfte Form des Bodens 82 des Vorstufenhohlrads 58 gelingt, einerseits das Vorstufenhohlrad 58 mit der Mitnehmerhülse 33 zu koppeln und andererseits noch genügend Raum für den Bremskolben 43 zur Verfügung zu haben.

Für die Lamellenbremse könnte auch ein elektrischer Aktuator vorgesehen sein.

### Bezugszeichenliste

- 5: Getriebeträger
- 6: Befestigungsflansch an 5
- 7: zentrale Ausnehmung in 5
- 10: Planetengetriebestufe
- 11: weitere Getriebestufe
- 12: Hauptgetriebe
- 13: Eingangssonnenwelle
- 18: Sonnenrad
- 19: Planetenräder
- 20: Lagerzapfen
- 21: Planetensteg
- 22: Hohlrad
- 23: Befestigungsflansch an 22
- 24: Kegelrollenlager
- 25: Innenverzahnung an 21
- 26: Außenverzahnung an 27
- 27: zweites Sonnenrad
- 28: Lagerzapfen an 5
- 29: Wälzlageranordnung für 30
- 30: Stirnräder
- 31: Außenverzahnung an 13
- 32: Innenverzahnung an 33
- 33: Mitnehmerhülse
- 34: Rillenkugellager
- 38: Abschnitt von 7
- 39: Abschnitt von 7
- 40: Innenschulter in 7
- 41: Lamellenpaket
- 42: Parkbremse
- 43: Bremskolben
- 44: Federanordnung
- 45: Sicherungsring
- 46: Außenschulter von 43
- 47: Innenschulter in 7
- 48: Abschnitt von 7
- 49: Druckraum
- 50: Hydraulikmotor
- 55: Getriebevorstufe
- 56: Vorstufeneingangswelle
- 57: Zentralrad
- 58: Vorstufenhohlrad
- 59: Vorstufenzwischenräder
- 60: Zusatzträger
- 61: Bund an 60
- 62: Senkung an 5
- 63: Senkkopfschrauben
- 68: Nadelkranz
- 69: Hohlbolzen
- 70: Senkungen in 60 und 71
- 71: Zwischenräderplatte
- 72: Maschinenschrauben
- 73: Anlaufscheiben
- 77: Ringkanal
- 78: Dichtring
- 79: Dichtring
- 80: Bohrung in 60
- 81: Radialwellendichtring
- 82: Boden von 58
- 83: zentrale Öffnung in 82
- 84: Innenverzahnung in 83
- 85: Sicherungsring
- 86: Sicherungsring

## Patentansprüche

1. Kompaktgetriebe, insbesondere zur Verwendung innerhalb einer Einzelradantriebseinheit, mit einem gestellfesten Getriebeträger (5), der eine durchgehende zentrale Ausnehmung (7) hat, mit einem innenverzahnten Hohlrad (22), das außen auf dem Getriebeträger (5) drehbar gelagert und Teil eines Hauptgetriebes (12) ist, das des Weiteren vor der einen Stirnseite des Getriebeträgers (5) angeordnete, außenverzahnte und mit dem Hohlrad (22) kämmende Zahnräder (19, 30) und eine Eingangssonnenwelle (13) umfasst, und mit einer Getriebevorstufe (55), die innerhalb der zentralen Ausnehmung (7) des Getriebeträgers (5) angeordnet ist und eine Vorstufeneingangswelle (56) mit einem außenverzahnten Vorstufensonnenrad (57), ein Vorstufenhohlrad (58) und mindestens ein sowohl mit dem Vorstufensonnenrad (57) als auch mit dem Vorstufenhohlrad (58) kämmendes Vorstufenzwischenrad (59), vorzugsweise mehrere Vorstufenzwischenräder (59) aufweist,
wobei an dem Getriebeträger (5) ein Zusatzträger (60) befestigt ist, der die zentrale Ausnehmung (7) weitgehend abdeckt und durch den die Vorstufenzwischenräder (59) unverlierbar in der zentralen Ausnehmung (7) des Getriebeträgers (5) gehalten sind, **dadurch gekennzeichnet, dass** der umlaufende Bund (61) des Zusatzträgers (60) von einer Senkung (62) im Getriebeträger (5) aufgenommen ist.

2. Kompaktgetriebe nach Patentanspruch 1, wobei zwischen dem Zusatzträger (60) und dem Getriebeträger (5) eine Dichtung (78, 79) angeordnet ist.

3. Kompaktgetriebe nach Patentanspruch 1 oder 2, wobei der Zusatzträger (60) zumindest teilweise in die zentrale Ausnehmung (7) des Getriebeträgers (5) eingesetzt ist und wobei vorzugsweise zwischen dem Zusatzträger (60) und dem Getriebeträger (5) eine Radialdichtung (78, 79) angeordnet ist.

4. Kompaktgetriebe nach Patentanspruch 3, wobei der Zusatzträger (60) einen umlaufenden Bund (61) aufweist, mit dem er axial auf dem Getriebeträger (5) aufliegt und mit dem er an dem Getriebeträger (5) befestigt ist.

5. Kompaktgetriebe nach Patentanspruch 4, wobei der Zusatzträger (60) und der Getriebeträger (5) stirnseitig miteinander fluchten.

6. Kompaktgetriebe nach einem vorhergehenden Patentanspruch, wobei zwischen dem Zusatzträger (60) und der Vorstufeneingangswelle (56) ein Radialwellendichtring (81) angeordnet ist.

7. Kompaktgetriebe nach einem vorhergehenden Patentanspruch, wobei die Vorstufenzwischenräder (59) auf fest am Zusatzträger (60) befindliche Lagerzapfen (69) gelagert sind und wobei das Vorstufenhohlrad (58) den Abtrieb der Getriebevorstufe (55) darstellt.

8. Kompaktgetriebe nach Patentanspruch 7, wobei vor der dem Zusatzträger (60) abgewandten Stirnseite der Vorstufenzwischenräder (59) eine Zwischenräderplatte (71) angeordnet ist, die mit den Lagerzapfen (69) als Abstandshalter am Zusatzträger (60) befestigt ist.

9. Kompaktgetriebe nach Patentanspruch 8, wobei die Lagerzapfen (69) als Hohlbolzen ausgebildet sind und die Zwischenräderplatte (71) mit Hilfe von durch die Lagerzapfen (69) hindurchgehenden Schrauben (72) an dem Zusatzträger (60) befestigt ist.

10. Kompaktgetriebe nach einem der Patentansprüche 7 bis 9, wobei die Lagerzapfen (69) in Senkungen (70) des Zusatzträgers (60) und /oder der Zwischenräderplatte (71) zentriert sind.

11. Kompaktgetriebe nach einem der Patentansprüche 7 bis 10, wobei sich axial zwischen dem Zusatzträger (60) und /oder der Zwischenräderplatte (71) und den Vorstufenzwischenrädern (59) Anlaufscheiben (73) befinden.

12. Kompaktgetriebe nach einem der Patentansprüche 8 bis 10, wobei die Zwischenräderplatte (71) radial über die Vorstufeneingangswelle (56) reicht und eine Axialbewegung der Vorstufeneingangswelle (56) in die eine Richtung begrenzt.

13. Kompaktgetriebe nach einem der vorhergehenden Patentansprüche, wobei die Lager (68) der Vorstufenzwischenräder (59) über einen zumindest teilweise im Zusatzträger (60) verlaufenden Fluidpfad (77, 80) mit einem Schmierstoff versorgt werden.

14. Kompaktgetriebe nach einem der Patentansprüche 7 bis 13, wobei das Vorstufenhohlrad (58) schalenförmig mit einem Boden (82) ausgebildet ist, in dem sich eine zentrale Öffnung (83) befindet, wobei der Rand der zentralen Öffnung (83) mit einer Innenverzahnung (84) versehen ist und wobei das Vorstufenhohlrad (58) über diese Innenverzahnung (84) drehfest mit der Eingangssonnenwelle (13) des Hauptgetriebes (12) gekoppelt ist derart, dass das Vorstufenhohlrad (58) und die Eingangssonnenwelle (13) die gleiche Drehzahl haben.

15. Kompaktgetriebe nach Patentanspruch 14, wobei das Vorstufenhohlrad (58) mit der Eingangssonnenwelle (13) des Hauptgetriebes (12) über eine Mitnehmerhülse (33) gekoppelt ist, die an ihrem einen Ende über ein Drehlager (34) am Getriebeträger (5) drehbar gelagert und an ihrem anderen Ende außenverzahnt ist und rundum in die am Rand der zentralen Öffnung (83) des Vorstufenhohlrads (58) ausgebildete Innenverzahnung (84) eingreift.

16. Kompaktgetriebe nach einem vorhergehenden Patentanspruch, wobei in der zentralen Ausnehmung (7) des Getriebeträgers (5) die Bremslamellen und ein Betätigungskolben (43) einer Betriebsbremse oder einer Parkbremse angeordnet sind und wobei sich die Getriebevorstufe (55) radial innerhalb von Teilen der Bremse befindet.

## Claims

1. Compact transmission, in particular for use within a single-wheel drive unit, having a transmission support (5) which is fixed with respect to the chassis and has a continuous central cutout (7), having an internally toothed internal gear (22) which is mounted rotatably on the transmission support (5) at the outside and is part of a main transmission (12) which furthermore comprises externally toothed gearwheels (19, 30), arranged in front of a face side of the transmission support (5) and meshing with the internal gear (22), and an input sun shaft (13), and having a preliminary transmission stage (55) which is arranged within the central cutout (7) of the transmission support (5) and has a preliminary-stage input shaft (56) with an externally toothed preliminary-stage sun gear (57), has a preliminary-stage internal gear (58) and has at least one preliminary-stage intermediate gear (59), which meshes both with the preliminary-stage sun gear (57) and the preliminary-stage internal gear (58), preferably multiple preliminary-stage intermediate gears (59),
wherein fastened to the transmission support (5) is an auxiliary support (60) which largely covers the central cutout (7) and by way of which the preliminary-stage intermediate gears (59) are held captively in the central cutout (7) of the transmission support (5), **characterized in that** the encircling collar (61) of the auxiliary support (60) is received by a depression (62) in the transmission support (5).

2. Compact transmission according to Patent Claim 1, wherein a seal (78, 79) is arranged between the auxiliary support (60) and the transmission support (5) .

3. Compact transmission according to Patent Claim 1 or 2, wherein the auxiliary support (60) is inserted at least partially into the central cutout (7) of the transmission support (5), and wherein a radial seal (78, 79) is arranged preferably between the auxiliary support (60) and the transmission support (5) .

4. Compact transmission according to Patent Claim 3, wherein the auxiliary support (60) has an encircling collar (61) by way of which it bears axially on the transmission support (5) and by way of which it is fastened to the transmission support (5).

5. Compact transmission according to Patent Claim 4, wherein the auxiliary support (60) and the transmission support (5) are aligned with one another at a face side.

6. Compact transmission according to a preceding claim, wherein a radial shaft-sealing ring (81) is arranged between the auxiliary support (60) and the preliminary-stage input shaft (56).

7. Compact transmission according to a preceding claim, wherein the preliminary-stage intermediate gears (59) are mounted on bearing journals (69) which are situated fixedly on the auxiliary support (60), and wherein the preliminary-stage internal gear (58) constitutes the drive output of the preliminary transmission stage (55).

8. Compact transmission according to Patent Claim 7, wherein, in front of that face side of the preliminary-stage intermediate gears (59) which faces away from the auxiliary support (60), there is arranged an intermediate-gear plate (71) which is fastened by way of the bearing journals (69), as spacers, to the auxiliary support (60).

9. Compact transmission according to Patent Claim 8, wherein the bearing journals (69) are in the form of hollow pins, and the intermediate-gear plate (71) is fastened to the auxiliary support (60) with the aid of screws (72) which pass through the bearing journals (69).

10. Compact transmission according to one of Patent Claims 7 to 9, wherein the bearing journals (69) are centred in depressions (70) of the auxiliary support (60) and/or the intermediate-gear plate (71).

11. Compact transmission according to one of Patent Claims 7 to 10, wherein thrust washers (73) are situated axially between the auxiliary support (60) and/or the intermediate-gear plate (71) and the preliminary-stage intermediate gears (59).

12. Compact transmission according to one of Patent Claims 8 to 10, wherein the intermediate-gear plate (71) extends radially over the preliminary-stage input shaft (56) and limits an axial movement of the preliminary-stage input shaft (56) in one direction.

13. Compact transmission according to one of the preceding patent claims, wherein the bearings (68) of the preliminary-stage intermediate gears (59) are supplied with a lubricant via a fluid path (77, 80) which runs at least partially in the auxiliary support (60).

14. Compact transmission according to one of Patent Claims 7 to 13, wherein the preliminary-stage internal gear (58) is of shell-shaped form with a base (82), in which base there is a central opening (83), wherein the edge of the central opening (83) is provided with an internal toothing (84), and wherein the preliminary-stage internal gear (58) is coupled in a rotational conjoint manner to the input sun shaft (13) of the main transmission (12) via said internal toothing (84) in such a way that the preliminary-stage internal gear (58) and the input sun shaft (13) have the same rotational speed.

15. Compact transmission according to Patent Claim 14, wherein the preliminary-stage internal gear (58) is coupled to the input sun shaft (13) of the main transmission (12) via a driver sleeve (33), which, at one end thereof, is mounted rotatably on the transmission support (5) via a rotary bearing (34) and which, at the other end thereof, is externally toothed and engages all the way around into the inner toothing (84) formed at the edge of the central opening (83) of the preliminary-stage internal gear (58).

16. Compact transmission according to one of the preceding patent claims, wherein the brake plates and an actuating piston (43) of a service brake or of a parking brake are arranged in the central cutout (7) of the transmission support (5), and wherein the preliminary transmission stage (55) is situated radially within parts of the brake.

## Revendications

1. Transmission compacte, destinée notamment à être utilisée à l'intérieur d'une unité d'entraînement à roue unique, ladite transmission comprenant un support de transmission (5), qui est fixé à un bâti et qui comporte un évidement central traversant (7), une couronne à denture intérieure (22) qui est montée de manière rotative à l'extérieur sur le support de transmission (5) et qui fait partie d'une transmission principale (12) qui comprend en outre des roues dentées (19, 30) à denture extérieure, qui s'engrènent avec la couronne (22) et qui sont disposées devant l'une des faces frontales du support de transmission (5), et qui comprend un arbre solaire d'entrée (13), et un étage de transmission d'entrée (55) qui est disposé à l'intérieur de l'évidement central (7) du support de transmission (5) et qui comporte un arbre d'entrée d'étage d'entrée (56) pourvu d'une roue solaire de l'étage d'entrée (57) à denture extérieure, une couronne d'étage d'entrée (58) et au moins une roue intermédiaire d'étage d'entrée (59), de préférence une pluralité de roues intermédiaires d'étage d'entrée (59), en engrènement aussi bien avec la roue solaire d'étage d'entrée (57) qu'avec la couronne d'étage d'entrée (58),
un support supplémentaire (60) étant fixé au support de transmission (5) et recouvrant dans une large mesure l'évidement central (7) et permettant de maintenir les roues intermédiaires d'étage d'entrée (59) de manière imperdable dans l'évidement central (7) du support de transmission (5), **caractérisée en ce que** la collerette périphérique (61) du support supplémentaire (60) est logée dans une dépression (62) ménagée dans le support de transmission (5).

2. Transmission compacte selon la revendication 1, une garniture d'étanchéité (78, 79) étant disposée entre le support supplémentaire (60) et le support de transmission (5).

3. Transmission compacte selon la revendication 1 ou 2, le support supplémentaire (60) étant inséré au moins partiellement dans l'évidement central (7) du support de transmission (5) et une garniture d'étanchéité radiale (78, 79) étant disposée de préférence entre le support supplémentaire (60) et le support de transmission (5).

4. Transmission compacte selon la revendication 3, le support supplémentaire (60) comportant une collerette périphérique (61) permettant audit support supplémentaire de venir en appui axial sur le support de transmission (5) et d'être fixé au support de transmission (5).

5. Transmission compacte selon la revendication 4, le support supplémentaire (60) et le support de transmission (5) étant alignés l'un avec l'autre du côté frontal.

6. Transmission compacte selon l'une des revendications précédentes, une bague d'étanchéité d'arbre radiale (81) étant disposée entre le support supplémentaire (60) et l'arbre d'entrée d'étage d'entrée (56).

7. Transmission compacte selon l'une des revendications précédentes, les roues intermédiaires d'étage d'entrée (59) étant montées sur des tourillons (69) situés de manière fixe sur le support supplémentaire (60) et la couronne d'étage d'entrée (58) représentant la sortie de l'étage d'engrenage d'entrée de transmission (55).

8. Transmission compacte selon la revendication 7, une plaque de roue intermédiaire (71), qui est fixée au support supplémentaire (60) en tant qu'élément d'espacement (69), étant disposée devant la face frontale des roues intermédiaires d'étage d'entrée (59) qui est dirigée à l'opposé du support supplémentaire (60) .

9. Transmission compacte selon la revendication 8, les tourillons (69) étant conçus sous la forme de boulons creux et la plaque de roue intermédiaire (71) étant fixée au support supplémentaire (60) à l'aide de vis (72) passant à travers les tourillons (69).

10. Transmission compacte selon l'une des revendications 7 à 9, les tourillons (69) étant centrés dans des dépressions (70) du support supplémentaire (60) et/ou de la plaque de roue intermédiaire (71).

11. Transmission compacte selon l'une des revendications 7 à 10, des rondelles de butée (73) étant situées axialement entre le support supplémentaire (60) et/ou la plaque de roue intermédiaire (71) et les roues intermédiaires d'étage d'entrée (59).

12. Transmission compacte selon l'une des revendications 8 à 10,
ladite plaque de roue intermédiaire (71) s'étendant radialement sur ledit arbre d'entrée d'étage d'entrée (56) et limitant un mouvement axial dudit arbre d'entrée d'étage d'entrée (56) dans l'une des directions.

13. Transmission compacte selon l'une des revendications précédentes, les paliers (68) des roues intermédiaires d'étage d'entrée (59) étant alimentés en lubrifiant par un chemin de fluide (77, 80) qui s'étend au moins partiellement dans le support supplémentaire (60) .

14. Transmission compacte selon l'une des revendications 7 à 13, la couronne d'étage d'entrée (58) étant conçue sous forme de coque pourvue d'une base (82) dans laquelle est ménagée une ouverture centrale (83), le bord de l'ouverture centrale (83) étant pourvu d'une denture intérieure (84) et la couronne d'étage d'entrée (58) étant accouplée solidairement en rotation à l'arbre solaire d'entrée (13) de la transmission principale (12) par le biais de cette denture intérieure (84) de manière à ce que la couronne d'étage d'entrée (58) et l'arbre solaire d'entrée (13) aient la même vitesse de rotation.

15. Transmission compacte selon la revendication 14, la couronne d'étage d'entrée (58) étant accouplée à l'arbre solaire d'entrée (13) de la transmission principale (12) par le biais d'un manchon d'entraînement (33) qui est monté de manière rotative à une de ses extrémités sur le support de transmission (5) par le biais d'un coussinet de pivotement (34), qui est pourvu d'une denture extérieure à son autre extrémité et qui s'engage parfaitement dans la denture intérieure (84) formée au bord de l'ouverture centrale (83) de la couronne d'étage d'entrée (58).

16. Transmission compacte selon l'une des revendications précédentes, les disques de frein et un piston d'actionnement (43) d'un frein de service ou d'un frein de stationnement étant disposés dans l'évidement central (7) du support de transmission (5) et l'étage d'entrée de transmission (55) étant situé radialement à l'intérieur de parties du frein.
